# EUROPÄISCHE PATENTSCHRIFT

(11) **EP 2 746 696 B1**
(45) Veröffentlichungstag und Bekanntmachung des Hinweises auf die Patenterteilung: **27.02.2019**
(21) Anmeldenummer: 13193669.2
(22) Anmeldetag: 20.11.2013
(51) Int. Cl.: F24S 25/632, F24S 25/60, F24S 25/634, F24S 25/00

(54) **Vorrichtung zum Befestigen von Solarmodulen an einem Trägerprofil**
Device for fixing solar modules to a support profile
Dispositif de fixation de modules solaires sur un profil de support

(30) Priorität: 19.12.2012 DE 102012223832
(43) Veröffentlichungstag der Anmeldung: 25.06.2014
(73) Patentinhaber: A. RAYMOND et Cie, 38000 Grenoble (FR)
(72) Erfinder: Hullmann, Klaus, 79539 Lörrach (DE); Haas, Torsten, 79539 Lörrach (DE); Philipp, Norman, 79540 Lörrach (DE)
(74) Vertreter: Grünecker Patent- und Rechtsanwälte PartG mbB

(56) Entgegenhaltungen:
- DE-U1-202008 000 997
- DE-U1-202011 003 490
- JP-A- H10 339 008

## Beschreibung

Die Erfindung betrifft eine Vorrichtung zum Befestigen von Solarmodulen an einem Trägerprofil gemäß dem Oberbegriff des Patentanspruches 1. Das Dokument DE 20 2011 003 490 U1 beschreibt eine Vorrichtung zum Befestigen von Solarmodulen gemäß dem Oberbegriff des Anspruchs 1.

Aus JP H10 339008 A und aus DE 20 2008 000 997 U1 sind Vorrichtungen zum Befestigen von Solarmodulen an einem Trägerprofil bekannt, die mehrteilig mit einem Halteprofil zum Aufnehmen einer Randseite wenigstens eines Solarmodules und mit einem separaten, über eine Verbindungseinrichtung mit dem Halteprofil verbindbaren Befestigungsfuß ausgebildet sind.

Der Erfindung liegt die Aufgabe zugrunde, eine Vorrichtung der eingangs genannten Art anzugeben, die sich bei einer hohen Stabilität durch eine verhältnismäßig einfache und kostengünstige Herstellung auszeichnet.

Diese Aufgabe wird bei einer Vorrichtung der eingangs genannten Art erfindungsgemäß mit den kennzeichnenden Merkmalen des Patentanspruches 1 gelöst.

Durch das Herstellen des Halteprofils sowie des Befestigungsfußes in seinen einzelnen Bestandteilen einstückig aus einem Blechteil und durch das Ausbilden von gekrümmten Verbindungsabschnitten und Übergangsabschnitten ergibt sich bei einer hohen Stabilität eine verhältnismäßig einfache sowie kostengünstige Herstellung.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein einstückig in einem Stanz-Biege-Prozess aus einem Metallblech hergestelltes Ausführungsbeispiel einer erfindungsgemäßen Vorrichtung,
- Fig. 2: in einer Draufsicht den Zuschnitt für das Ausführungsbeispiel gemäß Fig. 1 vor Durchführen des Biegevorganges,
- Fig. 3: in einer perspektivischen Ansicht das Ausführungsbeispiel gemäß Fig. 1 in einer Endmontageanordnung an einem Trägerprofil und
- Fig. 4: in einer Seitenansicht das Ausführungsbeispiel gemäß Fig. 1 in der Endmontageanordnung gemäß Fig. 3 mit mittels der erfindungsgemäßen Vorrichtung an dem Trägerprofil befestigten Solarmodulen.

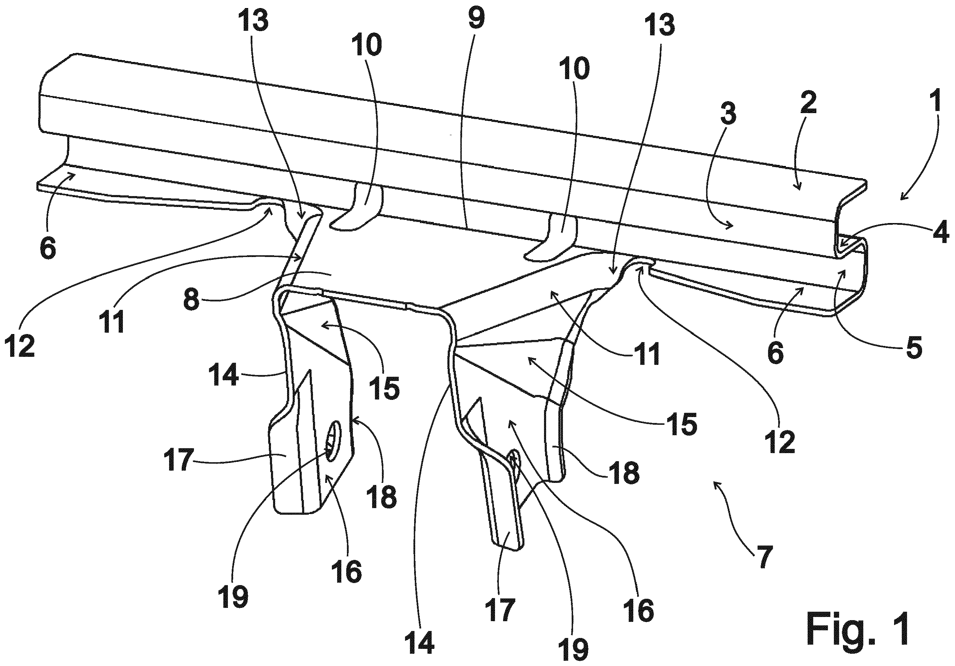

Fig. 1 zeigt in einer perspektivischen Ansicht ein Ausführungsbeispiel einer erfindungsgemäßen Vorrichtung, das in einem Stanz-Biege-Prozess einstückig aus einem Metallblech hergestellt ist. Das Ausführungsbeispiel gemäß Fig. 1 verfügt über ein S-artig ausgebildetes, längliches und sich in einer Querrichtung erstreckendes Halteprofil 1, das bei diesem Ausführungsbeispiel durch einen Abdeckabschnitt 2, durch einen mit dem Abdeckabschnitt 2 verbundenen und rechtwinklig zu dem Abdeckabschnitt 2 ausgerichteten deckseitigen Randabschnitt 3, durch einen mit dem deckseitigen Randabschnitt 3 verbundenen, rechtwinklig zu dem deckseitigen Randabschnitt 3 und parallel zu dem Abdeckabschnitt 2 ausgerichteten mittleren Auflageabschnitt 4, durch einen mit dem mittleren Auflageabschnitt 4 verbundenen und rechtwinklig zu dem mittleren Auflageabschnitt 4 ausgerichteten fußseitigen Randabschnitt 5 sowie durch einen mit dem fußseitigen Randabschnitt 5 verbundenen, rechtwinklig zu dem fußseitigen Randabschnitt 5 sowie dem deckseitigen Randabschnitt 3 und parallel zu dem mittleren Auflageabschnitt 4 sowie dem Abdeckabschnitt 2 ausgerichteten zweiteiligen fußseitigen Auflageabschnitt 6 gebildet ist.

Weiterhin weist das Ausführungsbeispiel gemäß Fig. 1 einen U-artig ausgebildeten Befestigungsfuß 7 auf, der als Basis des U über eine plane Deckplatte 8 verfügt, die trapezartig ausgestaltet und mit ihrer langen Basisrandseite 9 mit dem fußseitigen Randabschnitt 5 verbunden ist.

Der Darstellung gemäß Fig. 1 lässt sich entnehmen, dass in dem fußseitigen Randabschnitt 5 und in der Deckplatte 8 sich beidseitig der Basisrandseite 9 erstreckende Versteifungsverprägungen 10 ausgebildet sind, um die Biegesteifigkeit des Befestigungsfußes 7 und des Halteprofils 1 in Bezug aufeinander gegenüber einer einfachen Abkantung entlang der Basisrandseite 9 zu erhöhen.

Im Übergangsbereich jeder schiefwinklig zu der Basisrandseite 9 ausgerichteten, als gekrümmter Verbindungsabschnitt ausgebildeten Schenkelrandseite 11 in das Halteprofil 1 ist eine Randausnehmung 12 eingebracht, die jeden fußseitigen Auflageabschnitt 6 gegenüber dem Befestigungsfuß 7 abschließt und deren dem Befestigungsfuß 7 zugewandte Begrenzung durch einen dreidimensional gekrümmten Übergangsabschnitt 13 gebildet ist.

An jeder Schenkelrandseite 11 der Deckplatte 8 ist eine Seitenplatte 14 des Befestigungsfußes 7 angeformt, wobei jede Seitenplatte 14 einen mit der Deckplatte 8 in Verbindung stehenden, aus schräg gestellten sowie aus zwei zueinander abgewinkelten Segmenten gebildeten Zwischenabschnitt 15 und einen planen Randabschnitt 16 aufweist. Die Segmente der Zwischenabschnitte 15 sind dabei so ausgestaltet, dass die Randabschnitte 16 im Wesentlichen parallel zueinander ausgerichtet sind.

Weiterhin lässt sich der Darstellung gemäß Fig. 1 entnehmen, dass an den an die Schenkelrandseiten 11 angrenzenden seitlichen Stirnseiten der Seitenplatten 14 ein dem Halteprofil 1 abgewandter kurzer Randsteg 17 und ein dem Halteprofil 1 zugewandter langer Randsteg 18 abgekantet sind, um die Biegesteifigkeit der Seitenplatten 14 gegenüber einer vollständig planen Ausführung zu erhöhen.

Schließlich lässt sich der Darstellung gemäß Fig. 1 entnehmen, dass in den von der Deckplatte 8 abgewandten Endbereichen der Randabschnitte 16 jeweils eine Durchsteckausnehmung 19 ausgebildet ist, deren Verbindungslinie in Querrichtung des Halteprofiles 1 ausgerichtet ist.

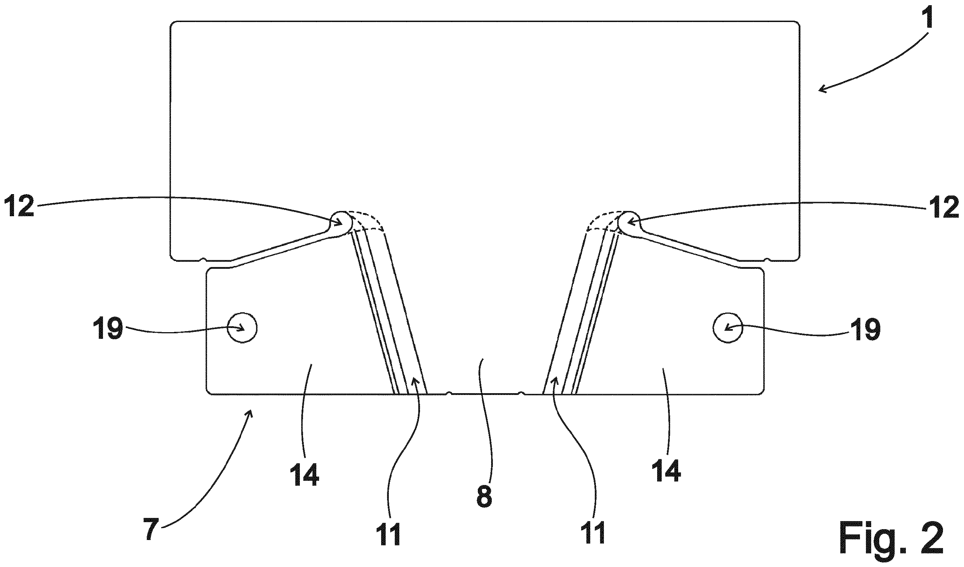

Fig. 2 zeigt in einer Draufsicht einen Zuschnitt für das Ausführungsbeispiel gemäß Fig. 1 nach Ausführen des Stanzvorganges und vor Durchführen des Biegevorganges. In Fig. 2 sind zwischen dem für die Deckplatte 8 vorgesehenen Material und dem für die Seitenplatten 14 vorgesehenen Material mit durchgezogenen geraden Strichen die Abkantlinien zum Abbiegen der Seitenplatten 14 von der Deckplatte 8 unter Ausbilden der Schenkelrandseiten 11 dargestellt, während mit unterbrochenen gekrümmten Strichen die sich zum Ausbilden der dreidimensional gekrümmten Übergangsabschnitte 13 zwischen den Randausnehmungen 12 und den Schenkelrandseiten 11 zwangsweise ergebenden Biegelinien gezeigt sind. Durch diesen Materialüberschuss zwischen den Randausnehmungen 12 und den Abkantlinien ergibt sich zusätzlich zu den Versteifungsverprägungen 10 gegenüber bis zu dem späteren fußseitigen Randabschnitt 5 durchgehenden Abkantlinien ein Erhöhen der Biegesteifigkeit des Befestigungsfußes 7 in Bezug auf das Halteprofil 1.

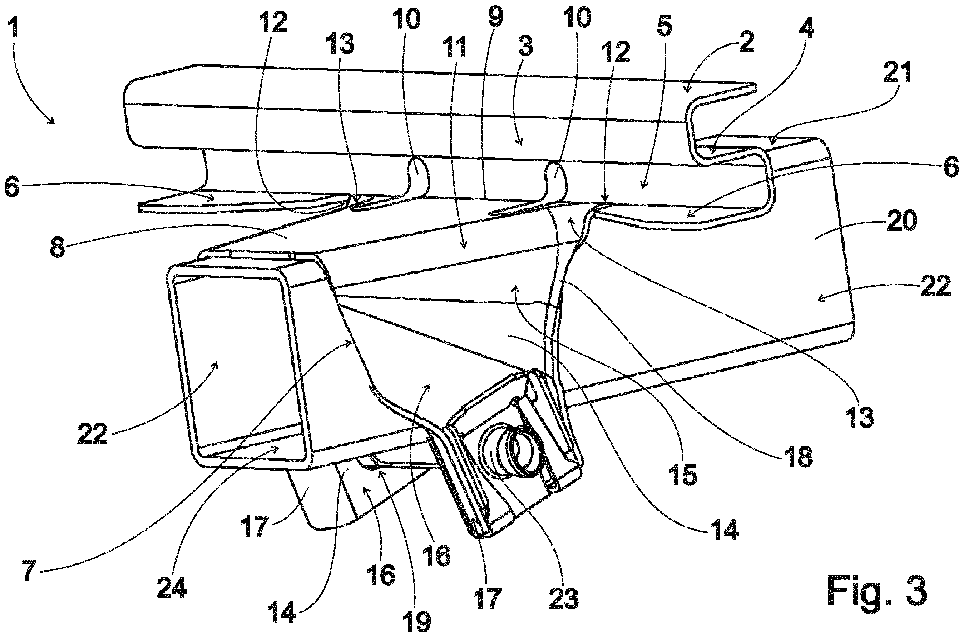

Fig. 3 zeigt in einer perspektivischen Ansicht das Ausführungsbeispiel gemäß Fig. 1 in einer mit einem Trägerprofil 20 verbundenen Endmontageanordnung. In der Endmontageanordnung gemäß Fig. 3 liegt die Deckplatte 8 auf einer Deckfläche 21 des Trägerprofiles 20 auf, während die Seitenplatten 14 mit ihren Randabschnitten 16 sich an die Deckfläche 21 anschließende Seitenflächen 22 des Trägerprofiles 20 einschließen. Durch die Durchsteckausnehmungen 19 ist ein die Randabschnitte 16 mit einer gewissen Zugspannung verbindendes Befestigungsmittel 23 durchgeführt, so dass das Halteprofil 1 mit dem Trägerprofil 20 verbunden ist. Das Befestigungsmittel 23 hintergreift eine der Deckfläche 21 gegenüber liegende, mit den Seitenflächen 22 verbundene Fußfläche 24 des Trägerprofiles 20.

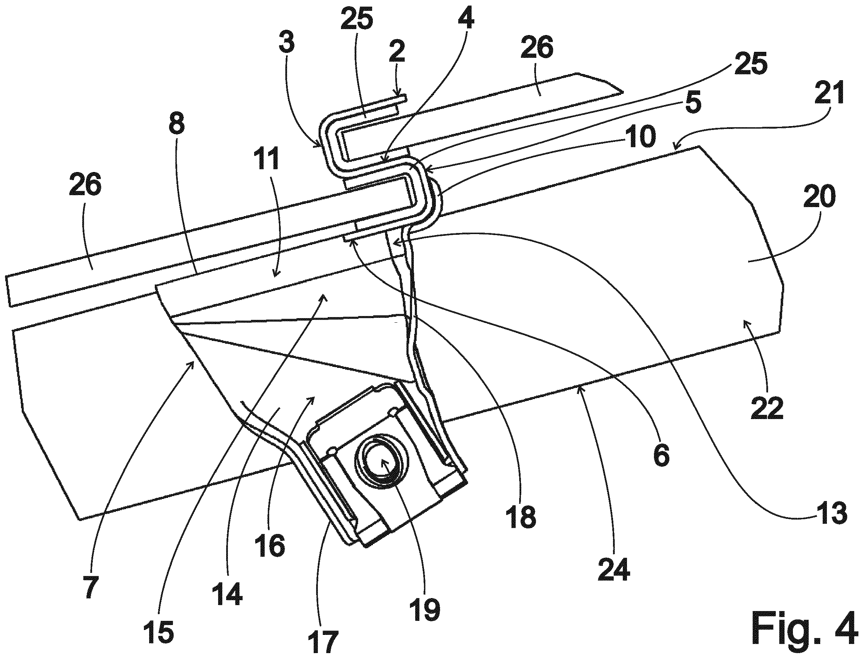

Fig. 4 zeigt in einer Seitenansicht das Ausführungsbeispiel gemäß Fig. 1 in der Endmontageanordnung gemäß Fig. 3. Aus Fig. 4 ist deutlich ersichtlich, dass durch die Abwinklung der Segmente der Zwischenabschnitte 15 die Randabschnitte 16 der Seitenplatten 14 in Richtung des Halteprofiles 1 abgewinkelt sind, so dass die Durchsteckausnehmungen 19 gegenüber einer in Bezug auf die Deckplatte 8 rechtwinkligen Ausrichtung der Randabschnitte 16 zu dem Halteprofil 1 hin versetzt sind. Dadurch ist der Abstand zwischen den Durchsteckausnehmungen 19 sowie dem Halteprofil 1 und damit die Hebelwirkung von auf das Halteprofil 1 einwirkenden Kräften verringert.

In der Darstellung gemäß Fig. 4 sind in die durch den Abdeckabschnitt 2, den deckseitigen Randabschnitt 3 und den mittleren Auflageabschnitt 4 beziehungsweise durch den mittleren Auflageabschnitt 4, den fußseitigen Randabschnitt 5 und die fußseitigen Auflageabschnitte 6 gebildeten Aufnahmeräume mit jeweils einer beispielsweise aus einem Gummimaterial oder einem weichelastischen Kunststoff gebildete Schutzeinlage 25 ausgekleidet, wobei Randseiten von Solarmodulen 26 in diese Aufnahmeräume eingeführt sind. Somit sind die Solarmodule 26 mit dem Trägerprofil 20 verbunden.

## Patentansprüche

1. Vorrichtung zum Befestigen von Solarmodulen (26) an einem Trägerprofil (20) mit einem Halteprofil (1), das zum Aufnehmen einer Randseite wenigstens eines Solarmodules (26) eingerichtet ist, und mit einem mit dem Halteprofil (1) verbundenen Befestigungsfuß (7), der eine Deckplatte (8) und wenigstens zwei mit der Deckplatte (8) fest verbundene sowie sich von der Deckplatte (8) weg erstreckende Seitenplatten (14) aufweist, wobei der Befestigungsfuß (7) U-artig ausgebildet ist, **dadurch gekennzeichnet, dass** das Halteprofil (1) und der Befestigungsfuß (7) ein einstückig aus einem Metallblech hergestelltes Blechteil sind, dass das Halteprofil (1) an einer Basisrandseite (9) der Deckplatte (8) angeformt ist, dass zwischen der Deckplatte (8) sowie jeder Seitenplatte (14) ein gekrümmter Verbindungsabschnitt (11) vorhanden ist und dass in einem Stoßbereich zwischen jedem Verbindungsabschnitt (11) sowie dem Halteprofil (1) ein dreidimensional gekrümmter Übergangsabschnitt (13) vorhanden ist.

2. Vorrichtung nach Anspruch 1, **dadurch gekennzeichnet, dass** die Deckplatte (8) trapezartig ausgestaltet und mit ihrer langen Randseite als Basisrandseite (9) mit dem Halteprofil (1) verbunden ist.

3. Vorrichtung nach Anspruch 1 oder Anspruch 2, **dadurch gekennzeichnet, dass** auf der der Deckplatte (8) abgewandten Seite jedes Übergangsabschnittes (13) eine in der Ebene der Deckplatte (8) liegende und sich in das Halteprofil (1) erstreckende Randausnehmung (12) vorhanden ist.

4. Vorrichtung nach einem der Ansprüche 1 bis 3, **dadurch gekennzeichnet, dass** wenigstens eine sich zwischen der Deckplatte (8) und dem Halteprofil (1) erstreckende Versteifungsverprägung (10) vorhanden ist.

5. Vorrichtung nach einem der Ansprüche 1 bis 4, **dadurch gekennzeichnet, dass** an den sich von der Deckplatte (8) weg erstreckenden Randseiten der Seitenplatten (14) Randstege (17, 18) abgestellt sind.

## Claims

1. Device for fixing solar modules (26) to a support profile (20), comprising a holding profile (1) which is configured to receive an edge side of at least one solar module (26), and comprising a fastening foot (7) which is connected to the holding profile (1) and which comprises a cover plate (8) and at least two side plates (14) which are firmly connected to the cover plate (8) and extend away from the cover plate (8), the fastening foot (7) being U-shaped, **characterized in that** the holding profile (1) and the fastening foot (7) are a one-piece sheet-metal part, that the holding profile (1) is formed on a base edge side (9) of the cover plate (8), that a curved connecting portion (11) is present between the cover plate (8) and each side plate (14), and that a three-dimensionally curved transition section (13) is present in an abutting region between each connecting portion (11) and the holding profile (1).

2. Device according to claim 1, **characterized in that** the cover plate (8) is trapezoidal in shape and is connected to the holding profile (1) with its long edge side as the base edge side (9).

3. Device according to claim 1 or claim 2, **characterized in that** on the side of each transition section (13) facing away from the cover plate (8) there is an edge recess (12) lying in the plane of the cover plate (8) and extending into the holding profile (1).

4. Device according to one of claims 1 to 3, **characterized in that** at least one stiffening embossing (10) extending between the cover plate (8) and the holding profile (1) is present.

5. Device according to one of claims 1 to 4, **characterized in that** edge webs (17, 18) are placed on the edge sides of the side plates (14) extending away from the cover plate (8).

## Revendications

1. Dispositif pour assurer la fixation de modules solaires (26) sur un profilé porteur (20), comprenant un profilé de retenue (1), qui est configuré pour accueillir la bordure d'un côté d'au moins un module solaire (26), et comprenant également un pied de fixation (7) relié au profilé de retenue (1) et présentant une plaque de recouvrement (8) et au moins deux plaques latérales (14), qui sont reliées de manière fixe à la plaque de recouvrement (8) et s'étendent de manière à s'éloigner de cette plaque de recouvrement (8), le pied de fixation (7) étant d'une configuration en forme de U,
**caractérisé en ce que** le profilé de retenue (1) et le pied de fixation (7) constituent une pièce en tôle d'un seul tenant réalisée à partir d'une tôle métallique, **en ce que** le profilé de retenue (1) est formé au niveau de la bordure d'un côté de base (9) de la plaque de recouvrement (8), **en ce qu'**entre la plaque de recouvrement (8) et chaque plaque latérale (14), il est prévu un tronçon de liaison (11) courbe, et **en ce que** dans une zone de jointure entre chaque tronçon de liaison (11) et le profilé de retenue (1), il est prévu un tronçon de transition (13) à courbure en trois dimensions.

2. Dispositif selon la revendication 1, **caractérisé en ce que** la plaque de recouvrement (8) est d'une configuration de forme trapézoïdale, et est reliée par la bordure de son côté de grande longueur en tant que bordure de côté de base (9), au profilé de retenue (1).

3. Dispositif selon la revendication 1 ou la revendication 2, **caractérisé en ce que** sur le côté de chaque tronçon de transition (13), qui est opposé à celui dirigé vers la plaque de recouvrement (8), il est prévu un évidement de bordure (12) se situant dans le plan de la plaque de recouvrement (8) et s'étendant vers l'intérieur du profilé de retenue (1).

4. Dispositif selon l'une des revendications 1 à 3, **caractérisé en ce qu'**il est prévu au moins un estampage de renfort (10) s'étendant entre la plaque de recouvrement (8) et le profilé de retenue (1).

5. Dispositif selon l'une des revendications 1 à 4, **caractérisé en ce que** des nervures de bordure (17, 18) sont coudées en saillie, au niveau des bordures des côtés des plaques latérales (14), qui s'étendent en s'éloignant de la plaque de recouvrement (8).
